# EUROPEAN PATENT SPECIFICATION

(11) **EP 2 401 909 B1**
(45) Date of publication and mention of the grant of the patent: **21.03.2018**
(21) Application number: 11170108.2
(22) Date of filing: 16.06.2011
(51) Int. Cl.: A01G 9/24, A01G 9/14

(54) **Greenhouse comprising a photovoltaic cover**
Treibhaus mit einer Photovoltaikabdeckung
Serre comportant un recouvrement photovoltaïque

(30) Priority: 29.06.2010 IT AN20100105
(43) Date of publication of application: 04.01.2012
(73) Proprietor: Allegrezza Giulietti, Alessandro, 60037 Monte San Vito (AN) (IT)
(72) Inventor: Allegrezza Giulietti, Alessandro, 60037 Monte San Vito (AN) (IT)
(74) Representative: Baldi, Claudio

(56) References cited:
- DE-C1- 3 437 118
- DE-U1-202007 010 836
- FR-A1- 2 344 217
- GB-A- 2 256 880

## Description

The present invention relates to a greenhouse comprising a photovoltaic cover. At the state of the art protected areas are created to grow vegetables and flowers in order to guarantee certain climatic conditions, in particular light and temperature.

In order to generate said protected areas, special structures known as greenhouses are created, being provided of walls that rise vertically from the ground until they reach the two sloping walls of the cover.

Moreover, according to the prior art photovoltaic modules are installed on said sloping walls to produce electricity for farming requirements.

Nevertheless, it must be considered that greenhouses require a suitable orientation of the sloping walls in order to maintain a correct balance between internal irradiation in winter and protection against excessive irradiation in summer.

Moreover, the brightness of the greenhouse must be as uniform as possible during sunlight hours in order to guarantee correct growing.

Therefore, it is understood that compliance of the requirements related to correct farming often prevails against the production of electricity by means of photovoltaic panels. Consequently, photovoltaic panels are often positioned incorrectly and do not produce all the electricity they would be able to produce.

DE20 2007 010 836U discloses a greenhouse having a cover comprising a plurality of pairs of sloping walls disposed as a plurality of overturned "V". The sloping walls of the cover are transparent glass and photovoltaic modules are disposed on portions of said sloping walls.

FR2 344 217 discloses a greenhouse having a cover with sloping lateral walls and horizontal flat central portion disposed between the sloping lateral walls. The entire cover consists of transparent solar collectors. Fan-coils and a reservoir are disposed in the central portion.

DE3437 118 discloses a greenhouse having a cover with sloped lateral walls and horizontal flat central portion disposed between the sloped lateral walls.

GB2 256 880 discloses a conservatory having an inclined glazed roof having mounted thereon a glazed lantern unit with decorative final.

The purpose of the present invention is to provide a greenhouse with photovoltaic cover that is able to overcome these and other drawbacks.

This purpose is achieved with a greenhouse with a photovoltaic cover according to claim 1. Additional advantageous characteristics are the object of the enclosed subclaims, which are an integral part of the present description.

Said characteristics will appear more evident with reference to the drawings that show two embodiments of the invention for illustrative, not limiting purposes, wherein:
- Fig. 1 is a perspective view of a first simplified embodiment of a greenhouse which does not form part of the present invention;
- Fig. 2 is a perspective view of a second advanced embodiment of the greenhouse according to the present invention;
- Fig. 3 is a side view of the advanced embodiment of Fig. 2.
- Fig. 4 is a perspective view of a third embodiment of the greenhouse according to the present invention.

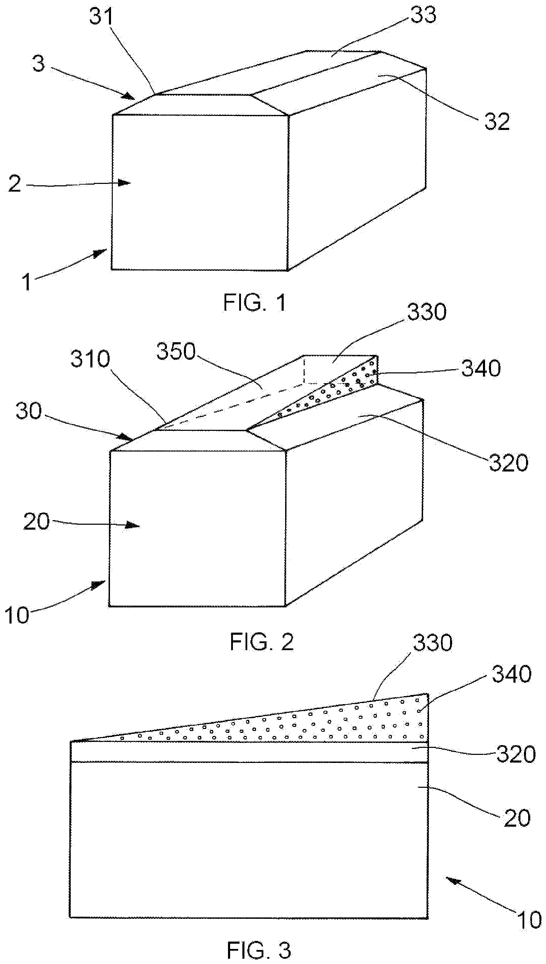

Referring to Fig. 1, a greenhouse (1), **which does not form part of** the present invention, is disclosed.

It comprises lateral walls (2) that extend vertically until they reach a cover (3).

The cover (3) comprises two lateral portions (31,32), each of them being joined to a lateral wall and to a common central portion (33), which is provided with photovoltaic modules of known type for which no additional information is necessary.

According to this simplified embodiment, the central portion (33) of the cover (3) is flat and extends in a direction basically parallel to the ground and perpendicular to the lateral walls (2).

Instead, the lateral portions are inclined by an angle ranging from 5° to 25° with respect to the horizontal direction, preferably between 10° and 20°, are devoid of photovoltaic modules and made of transparent material, such as glass or similar materials.

Given the rectangular shape of the greenhouse chosen for this example, both the central portion (33) and the lateral portions (31,32) are simple rectangles.

Obviously, it must be noted that, following these precepts, the expert of the field will be able to use other shapes for the greenhouse and its parts without effort, without leaving the precepts of the present invention and still falling in the protection field of the present invention, according to the enclosed claims and subclaims.

During the installation the greenhouse (1) is oriented in such a way that the central portion develops along a north-south direction, whereas the lateral portions (31,32) are facing east and west.

It has been noted that in such a way it is possible to guarantee the correct operation of the photovoltaic modules and the correct lighting of the greenhouse, thus benefiting both the production of electricity and the growing of the plants.

As regards the installation, the longitudinal axis of symmetry of the rectangular central portion (33) basically coincides with the north-south axis.

So, the photovoltaic modules are correctly exposed to sunlight and produce energy with a high output without impairing the growing of plants in the greenhouse (1).

An especially advantageous variant **according to the present invention** is shown in Figs. 2 and 3.

According to said variant, the greenhouse (10) comprises the same parts described for the greenhouse (1) of Fig. 1 and indicated with the same numerals, with addition of a final "0" (zero), which are not further described for sake of economy.

According to said complex variant, the central portion (330) of the cover (30) provided with photovoltaic modules is inclined towards one of the short lateral transversal walls of the greenhouse (10).

During the installation of said greenhouse (10) the central portion (330) is oriented in such a way to extend along a north-south direction and so that the highest section is facing north, whereas the lowest section is facing south.

In such a way, the central portion (330) is correctly inclined to optimize the output of the photovoltaic modules that are arranged on it. At the same time, the correct irradiation inside the greenhouse is guaranteed by the lateral portions (310,320) that are devoid of photovoltaic modules.

Advantageously, the central portion (330) is inclined with respect to a horizontal axis by an angle ranging from 5° to 25°, preferably from 10° to 20°.

According to this embodiment, two lateral extensions (340,350) connect the end section of said lateral portions (310,320) with the border of said central inclined portion (330); given said configuration, the lateral extensions (340,350) are basically triangular, but as mentioned above, they may be given a different shape according the shape chosen for the greenhouse (10) or its parts.

Said lateral extensions (340,350) have a vertical direction and are provided with air vents to favor ventilation inside the greenhouse (10).

As a matter of principle, numerous variants are possible according to these precepts.

For example, slightly curved surfaces can be obtained both for the lateral walls (2,20) and the cover (3,30) or its portions (31,32,33,310,320,330).

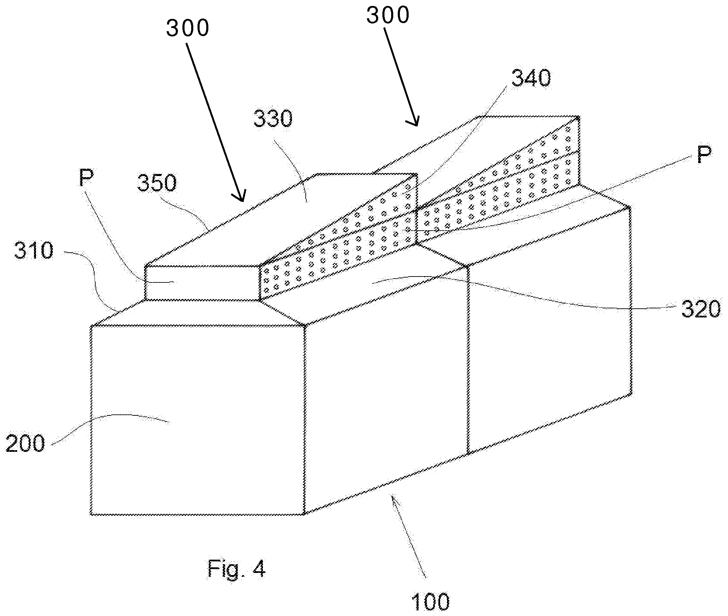

Referring to Fig. 4, the greenhouse (100) is provided with two identical covers (300) positioned in a sequence.

The peculiarity of each of the two covers (300) with respect to the preceding ones consists in the fact that it is provided with four transparent vertical walls (P) with identical height, thus increasing the distance between the central portion (330) and the two lateral inclined portions (310 and 320).

Said vertical walls (P) are provided with air vents to favor ventilation inside the greenhouse (100).

The higher the height of said vertical walls (P), the higher will be the distance between the photovoltaic panels installed on said central portion (330) and the bottom of the greenhouse where the plants are positioned.

In other words, when the height of said vertical walls (P) increases, the amount of light irradiating the plants inside the greenhouse (100) will increase, given the fact that the light can reach the inside of the greenhouse (100) both through the lateral transparent portions (310 and 320) and said vertical walls (P).

It must be noted that, upon increasing the height of the vertical transparent walls (P), it is possible to increase the width of the central portion (330) with respect to said walls (P), thus increasing the surface available for installation of photovoltaic panels, without reducing the amount of lighting inside the greenhouse.

## Claims

1. Greenhouse (10; 100) for horticulture, floriculture or similar activities, comprising lateral walls (20; 200) joined with a cover (30; 300) comprising two transparent lateral inclined portions (310, 320) and a central portion (330) situated between said two lateral inclined portions (310, 320), said central portion being provided with photovoltaic modules,
**characterized in that**
said central portion (330) of the cover has a longitudinal axis of symmetry basically coinciding with the north-south axis and said central portion (330) is sloped with respect to an horizontal plane, in such a way that the highest section of the central portion (330) is facing north and the lowest section of the central portion (330) is facing south, and
said cover (30; 300) comprises at least two lateral extensions (340, 350) that connect the end section of said lateral portions (310, 320) with a border of said central portion (330), said lateral extensions (340, 350) being provided with air vents.

2. Greenhouse (10; 100) as claimed in claim 1, **characterized in that** said lateral inclined portions (310, 320) are devoid of photovoltaic modules.

3. Greenhouse (10; 100) as claimed in claim 1 or 2, **characterized in that** said lateral portions (310, 320) are inclined with respect to a horizontal plane by an angle ranging from 5° to 25°, preferably from 10° to 20°.

4. Greenhouse (10; 100) according to one or more of claims 1 to 3, **characterized in that** said central portion (330) develops along a north-south direction and said lateral portions (310, 320) facing east and west respectively.

5. Greenhouse (10; 100) as claimed in one or more of claims 1 to 4, **characterized in that** said central portion (330) is basically flat.

6. Greenhouse (10; 100) as claimed in any one of the precedent claims, **characterized in that** said central portion (330) is inclined with respect to a horizontal axis by an angle ranging from 5° to 25°, preferably from 10° to 20°.

7. Greenhouse (100) as claimed in anyone of the preceding claims, **characterized in that** the cover (300) comprises four vertical transparent walls (P) that connect the central portion (330) to said two lateral inclined portions (310 and 320).

8. Greenhouse (100) as claimed in claim 7, **characterized in that** said vertical walls (P) are provided with air vents.

9. Greenhouse (100) as claimed in one of claims 7 or 8, **characterized in that** the central portion (330) protrudes laterally with respect to at least one vertical transparent wall (P).

## Patentansprüche

1. Gewächshaus (10; 100) für den Garten- und Zierpflanzenbau u. ä., umfassend Seitenwände (20; 200), die mit einer Abdeckung (30; 300) verbunden sind, umfassend zwei transparente, geneigte Seitenteile (310, 320) und einen mittleren Teil (330), der zwischen den beiden Seitenteilen (310, 320) angeordnet ist, wobei der mittlere Teil mit Photovoltaikmodulen versehen ist,
**dadurch gekennzeichnet, dass**
der mittlere Teil (330) der Abdeckung eine im Wesentlichen mit der Nord-Süd-Achse zusammenfallende längslaufende Symmetrieachse aufweist und der mittlere Teil (330) in Bezug auf eine horizontale Ebene geneigt ist, derart, dass der höchste Abschnitt des mittleren Teils (330) nach Norden gerichtet ist und der niedrigste Abschnitt des mittleren Teils (330) nach Süden gerichtet ist, und
die Abdeckung (30; 300) wenigstens zwei seitliche Verlängerungen (340, 350) umfasst, die den Endabschnitt der Seitenteile (310, 320) mit einer Kante des mittleren Teils (330) verbinden, wobei die seitlichen Verlängerungen (340, 350) mit Lufteinlässen versehen sind.

2. Gewächshaus (10; 100) nach Anspruch 1, **dadurch gekennzeichnet, dass** die geneigten Seitenteile (310, 320) frei von Photovoltaikmodulen sind.

3. Gewächshaus (10; 100) nach Anspruch 1 oder 2, **dadurch gekennzeichnet, dass** die Seitenteile (310, 320) in Bezug auf eine horizontale Ebene um einen Winkel im Bereich von 5° bis 25°, vorzugsweise von 10° bis 20° geneigt sind.

4. Gewächshaus (10; 100) nach einem oder mehreren der Ansprüche 1 bis 3, **dadurch gekennzeichnet, dass** der mittlere Teil (330) sich längs einer Nord-Süd-Richtung erstreckt und die Seitenteile (310, 320) dem Osten bzw. dem Westen zugewandt sind.

5. Gewächshaus (10; 100) nach einem oder mehreren der Ansprüche 1 bis 4, dass **dadurch gekennzeichnet, dass** der mittlere Teil (330) im Wesentlichen flach ist.

6. Gewächshaus (10; 100) nach einem der vorstehenden Ansprüche, **dadurch gekennzeichnet, dass** der mittlere Teil (330) in Bezug auf eine horizontale Achse um einem Winkel im Bereich von 5° bis 25°, vorzugsweise von 10° bis 10° geneigt ist.

7. Gewächshaus (100) nach einem der vorstehenden Ansprüche, **dadurch gekennzeichnet, dass** die Abdeckung (300) vier vertikale, transparente Wände (P) umfasst, die den mittleren Teil (330) mit den beiden geneigten Seitenteilen (310 und 320) verbinden.

8. Gewächshaus (100) nach Anspruch 7, **dadurch gekennzeichnet, dass** die vertikalen Wände (P) Lufteinlässe aufweisen.

9. Gewächshaus (100) nach Anspruch 7 oder 8, **dadurch gekennzeichnet, dass** der mittlere Teil (330) in Bezug auf die vertikale transparente Wand (P) seitlich auskragt.

## Revendications

1. Serre (10; 100) pour horticulture, floriculture ou activités similaires, comprenant des parois latérales (20; 200) unies à une couverture (30; 300) comprenant deux portions latérales inclinées transparentes (310, 320) et une portion centrale (330) disposée entre lesdites deux portions latérales inclinées (310, 320), ladite portion centrale étant équipée de modules photovoltaïques,
**caractérisée en ce que**
ladite portion centrale (330) de la couverture a un axe longitudinal de symétrie essentiellement coïncidant avec l'axe Nord-Sud et ladite portion centrale (330) est inclinée par rapport à un plan horizontal, de sorte que la section la plus haute de la portion centrale (330) est orientée vers le Nord et la section la plus basse de la portion centrale est orientée vers le Sud, et
dite couverture (30; 300) comprend au moins deux extensions latérales (340, 350) qui relient le segment terminal de dites portions latérales (310, 320) avec un bord de ladite portion centrale (330), lesdites extensions latérales (340, 350) étant munies de prises d'air.

2. Serre (10; 100) selon la revendication 1, **caractérisée en ce que** lesdites portions inclinées latérales (310, 320) sont démunies de modules photovoltaïques.

3. Serre (10; 100) selon la revendication 1 ou 2, **caractérisée en ce que** lesdites portions latérales (310, 320) sont inclinées par rapport à un plan horizontal d'un angle compris entre 5° et 25°, préférablement entre 10° et 20°.

4. Serre (10; 100) selon l'une ou plusieurs des revendications de 1 à 3, **caractérisée en ce que** ladite portion centrale (330) se développe le long d'une direction Nord-Sud et lesdites portions latérales (310, 320) sont orientées respectivement à Est et à Ouest.

5. Serre (10; 100) selon l'une ou plusieurs des revendications de 1 à 4, **caractérisée en ce que** ladite portion centrale (330) est essentiellement plate.

6. Serre (10; 100) selon l'une quelconque des revendications précédentes, **caractérisée en ce que** ladite portion centrale (330) est inclinée par rapport à un axe horizontal d'un angle compris entre 5° et 25°, préférablement entre 10° et 20°.

7. Serre (10; 100) selon l'une quelconque des revendications précédentes, **caractérisée en ce que** la couverture (300) comprend quatre parois verticales transparentes (P) qui relient la portion centrale (330) aux deux portions latérales inclinées (310 et 320).

8. Serre (100) selon la revendication 7, **caractérisée en ce que** lesdites parois verticales (P) présentent des prises d'air.

9. Serre (100) selon la revendication 7 ou 8, **caractérisée en ce que** la portion centrale (330) déborde latéralement par rapport à au moins une paroi verticale transparente (P).
